# EUROPEAN PATENT APPLICATION

(11) **EP 2 099 173 A1**
(43) Date of publication of application: **09.09.2009**
(21) Application number: 08734244.0
(22) Date of filing: 06.05.2008
(51) Int. Cl.: H04L 12/56

(54) **METHOD, SYSTEM AND SERVICE REGISTER CENTER FOR CONTROLLING ACCESS TO NON-SIP SERVICE**

(30) Priority: 04.09.2007 CN 200710149527
(71) Applicant: Huawei Technologies Co., Ltd., Longgang District, Shenzhen Guangdong 518129 (CN)
(72) Inventor: ZOU, Xianjun, Shenzhen Guangdong 518129 (CN); WANG, Ying, Shenzhen Guangdong 518129 (CN); WANG, Xiaoxuan, Shenzhen Guangdong 518129 (CN); LI, Yan, Shenzhen Guangdong 518129 (CN); XU, Wenhua, Shenzhen Guangdong 518129 (CN)
(74) Representative: Körber, Martin Hans
(86) International application number: PCT/CN2008/070888
(87) International publication number: WO 2009/030123

(57) **Abstract**

A method and system for controlling access to non-Session Initiation Protocol (SIP) services as well as a service registration center are provided. The method includes these steps: a service terminal sends a SIP request to an IP Multimedia Subsystem (IMS), where the request requires the IMS to reserve resources for a non-SIP service and carries an Address Of Record (AOR) of the non-SIP service; the IMS obtains the corresponding QoS information and the actual access address of the non-SIP service from a service registration center according to the AOR of the non-SIP service in the SIP request; the IMS reserves resources for the non-SIP service according to the obtained QoS information corresponding to the non-SIP service, and returns the actual access address of the non-SIP service to the service terminal; and the service terminal accesses the non-SIP service according to the actual access address. Through the technical solution provided herein, non-SIP services may be accessed through the QoS control capabilities, and thus high QoS assurance is provided for accessing non-SIP services.

## Description

### Field of the Invention

The present invention relates to Internet communication technologies, and in particular, relates to a method and system for controlling access to non-Session Initiation Protocol (non-SIP) services, and a service registration center.

### Background of the Invention

The IP Multimedia Subsystem (IMS) is a core network architecture for setting up, maintaining and managing Internet multimedia services. The IMS architecture is primarily adapted to process the SIP-related services. It supports both fixed and mobile access modes, and implements fixed-mobile convergence. The main function entities of the IMS architecture include: Home Subscriber Server (HSS), Proxy-Call Session Control Function (P-CSCF), Interrogating-Call Session Control Function (I-CSCF), Serving-Call Session Control Function (S-CSCF). These entities provide various SIP-based services such as the voice service and instant messaging service. The IMS is characterized by its perfect Quality of Service (QoS), security mechanism, and charging policies.

The IMS in the conventional art provides various SIP-based applications, but is incapable of handling non-SIP services. The non-SIP services on the Internet such as network games impose high requirements on stability and speed of network resources. If non-SIP services are accessed through an ordinary IP system, the QoS is not assured.

Therefore, in the process of creating the present invention, the inventor finds at least the following defects in the conventional art: In the technical solution provided in the conventional art, non-SIP services are accessed through an ordinary IP system, and the QoS is not assured.

### Summary of the Invention

The objectives of the embodiments of the present invention are to provide a method and system for controlling access to non-SIP services, and a service registration center, and provide high QoS assurance for non-SIP services.

The objectives of the embodiments of the present invention are achieved through the following technical solution:

A method for controlling access to non-SIP services is provided in an embodiment of the present invention. The method includes:

sending, by a service terminal, a SIP request to an IMS in order to request the IMS to reserve resources for a non-SIP service, where the SIP request carries an Address Of Record (AOR) of the non-SIP service;

obtaining, by the IMS, QoS information and an actual access address corresponding to the non-SIP service from a service registration center according to the AOR of the non-SIP service in the SIP request;

reserving, by the IMS, the resources for the non-SIP service according to the obtained QoS information corresponding to the non-SIP service, and returning the actual access address of the non-SIP service to the service terminal; and

accessing, by the service terminal, the non-SIP service according to the actual access address.

A control method for reserving resources for non-SIP services is provided in another embodiment of the present invention. The control method includes:

receiving a SIP request for reserving resources for a non-SIP service, where the SIP request carries an AOR of the non-SIP service;

obtaining QoS information corresponding to the non-SIP service from a service registration center according to the AOR of the non-SIP service in the SIP request; and

reserving the resources for the non-SIP service according to the obtained QoS information corresponding to the non-SIP service.

A method for providing QoS information corresponding to non-SIP services is provided in another embodiment of the present invention. The method includes:

receiving a SIP request for reserving resources for a non-SIP service, where the SIP request carries an AOR of the non-SIP service;

obtaining QoS information corresponding to the non-SIP service according to the AOR of the non-SIP service; and

returning the obtained QoS information corresponding to the non-SIP service.

A system for controlling access to non-SIP services is provided in another embodiment of the present invention. The system includes:

a P-CSCF, adapted to: receive and forward a SIP request for reserving resources for a non-SIP service, receive a SIP response, resolve standard parameters that are carried in the SIP response and need to be assured by the network into QoS parameters, and send the QoS parameters, where the SIP request carries an AOR of the non-SIP service;

a service registration center, adapted to: obtain corresponding QoS information and an actual access address of the non-SIP service according to the AOR in the SIP request forwarded by the P-CSCF, and send the SIP response that carries the corresponding QoS information and the actual access address of the non-SIP service to the P-CSCF; and

a Gateway GPRS Support Node (GGSN), adapted to reserve resources for the non-SIP service according to the QoS parameters carried in the SIP response sent by the P-CSCF.

A service registration center is provided in an embodiment of the present invention. The service registration center includes:

a SIP query processing unit, adapted to: receive a SIP request, obtain subscribed QoS information of a non-SIP service, judge whether any service feature information complying with conditions exists according to an AOR in the SIP request and the obtained subscribed QoS information of the non-SIP service, and if any service feature information complying with the conditions exists, obtain the actual access address and the corresponding QoS information in the service feature information complying with the conditions, and return a SIP response that carries the QoS information and the actual access address; and

a QoS parameter mapping unit, adapted to map the QoS parameters that are carried in the QoS information obtained by the SIP query processing unit and need to be assured by the network to standard parameters.

Through the method and the system for controlling access to non-SIP services as well as the service registration center provided herein, QoS-assured resources are reserved for non-SIP services through the IMS, and the non-SIP services are accessed through the resources, and thus high QoS assurance is provided for accessing non-SIP services.

### Brief Description of the Drawings

FIG. 1 is a signaling flowchart of a method for controlling access to non-SIP services in an embodiment of the present invention;

FIG. 2 shows a structure of a system for controlling access to non-SIP services in an embodiment of the present invention; and

FIG. 3 shows a structure of a service registration center in an embodiment of the present invention.

### Detailed Description of the Invention

A method and system for controlling access to non-SIP services as well as a service registration center are provided in embodiments of the present invention. To make the technical solution of the present invention clearer, the present invention is detailed below with reference to accompanying drawings and exemplary embodiments.

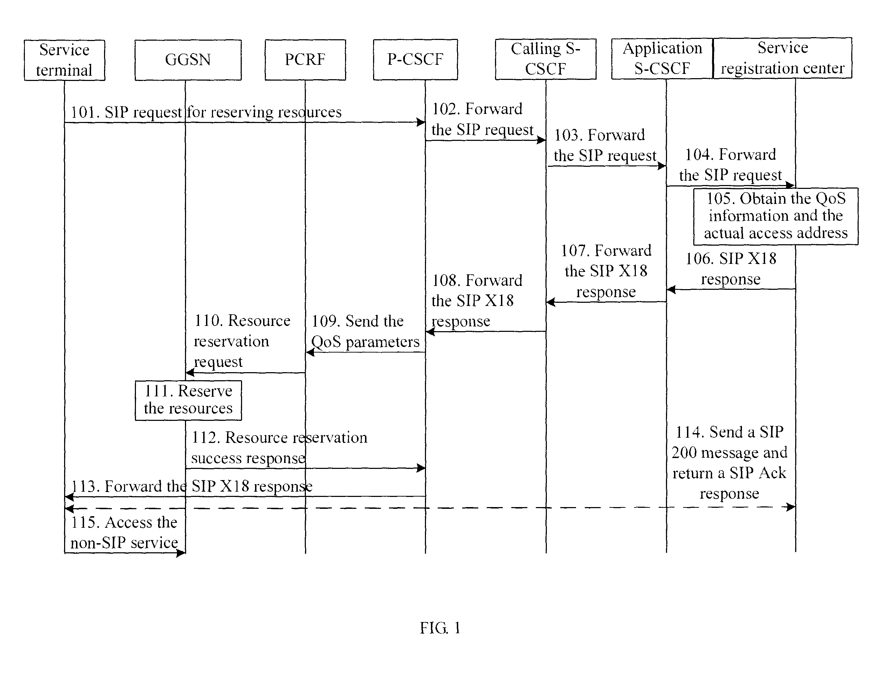

FIG. 1 is a flowchart of a method for controlling access to non-SIP services in an embodiment of the present invention. In this embodiment, the non-SIP service is a network game service.

The process of accessing the non-SIP service includes the following.

Before accessing the SIP service, the service terminal registers the Address of Record (AOR) of the non-SIP service, the actual access address of the non-SIP service, such as a Uniform Resource Locator (URL), socket address of the non-SIP service, and the QoS information corresponding to the non-SIP service with the service registration center, and the service registration center binds the AOR of the non-SIP service, the actual access address of the non-SIP service, and the corresponding QoS information. Therefore, the service registration center records the service feature information of various non-SIP services, including the AOR of the non-SIP service, actual access address of the non-SIP service, and QoS information corresponding to the non-SIP service.

In this embodiment, the service terminal registers the AOR of network game, namely, network game@huawei.com, the actual access address, i.e. http://www.huawei.com/network gamp, and the corresponding QoS information with the service registration center. Below is an example of the registered QoS information:

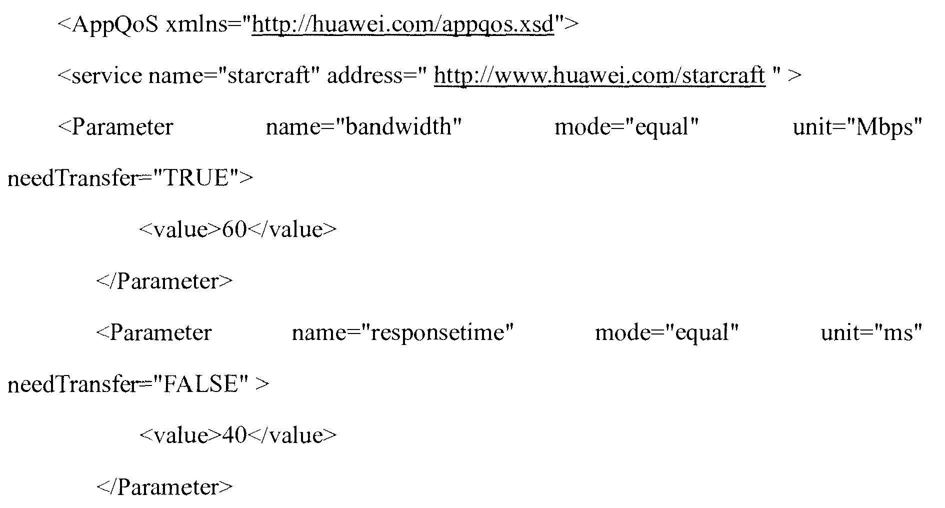

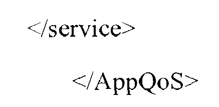

In the foregoing XML file, the "service" element represents the actual service; the "name" attribute represents the name of the service; the "address" attribute represents the address of the service (this attribute is optional in the service request description); the "Parameter" attribute describes the QoS parameter information corresponding to the service; the "mode" attribute represents the service mode and describes the QoS assurance available from the application server; and the "equal" attribute means that the QoS value provided by the application server is equal to the value corresponding the "value" sub-element.

Step 101: The service terminal sends a SIP request to a P-CSCF of the IMS, where the SIP request carries the AOR of the non-SIP service.

The SIP request may also carry the QoS information required by the non-SIP service. Below is an example of the SIP request:

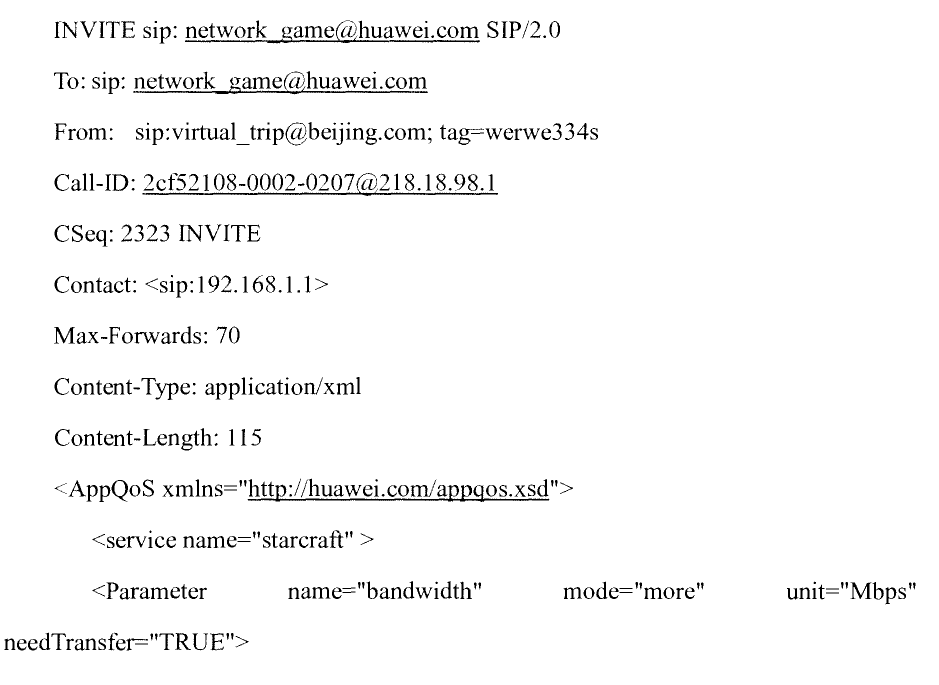

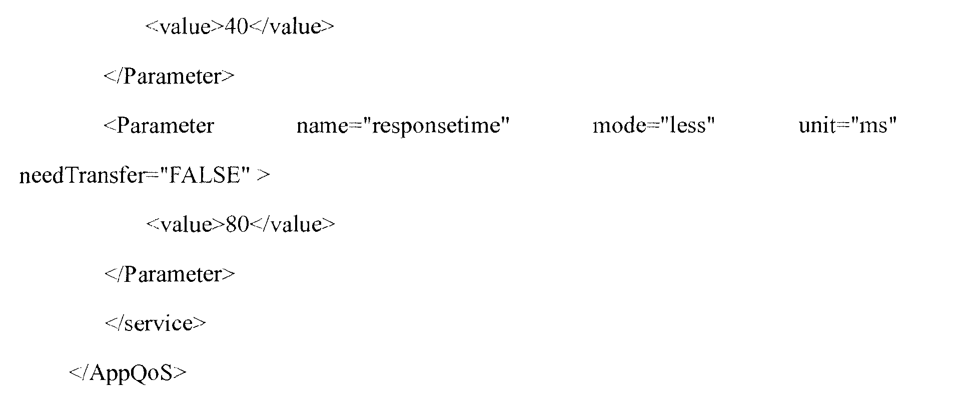

Step 102: The P-CSCF forwards the SIP request to a home calling S-CSCF of the service terminal.

Step 103: The home calling S-CSCF forwards the SIP request to the corresponding application S-CSCF according the AOR carried in the SIP request.

Step 104: The application S-CSCF forwards the SIP request to a service registration center according to an Initial Filter Criteria (iFC) rule.

Alternatively, the home calling S-CSCF may forward the SIP request to the service registration center directly.

Step 105: The service registration center obtains corresponding QoS information and actual access address of the non-SIP service according to the AOR in the SIP request.

If the SIP request carries only the AOR of the non-SIP service, the process in which the service registration center obtains the corresponding QoS information and the actual access address of the non-SIP service according to the AOR in the SIP request includes the following steps:

Step A: The IMS obtains the subscribed QoS information of the non-SIP service from an HSS.

The HSS stores the subscribed QoS information of various non-SIP services.

Step B: According to the AOR in the SIP request and the subscribed QoS information of the non-SIP service, whether the IMS stores the service feature information complying with conditions was judged. If the IMS stores the service feature information complying with conditions, the corresponding QoS information and actual access address of the non-SIP service from the service feature information complying with the conditions are obtained.

The service registration center already records the AOR of the non-SIP service, the actual access address of the non-SIP service, and the corresponding QoS information. Therefore according to the AOR in the SIP request and the subscribed QoS information of the non-SIP service, it is judged whether the recorded service feature information includes service feature information that has an AOR identical with the AOR in the SIP request and complies with the subscribed QoS information in the SIP request. If the recorded service feature information includes service feature information that has an AOR identical with the AOR in the SIP request and complies with the subscribed QoS information in the SIP request, the actual access address of the non-SIP service and the corresponding QoS information from the service feature information complying with the conditions are obtained.

If the SIP request also carries the QoS information required by the non-SIP service, the process in which the service registration center obtains, according to the AOR in the SIP request, the corresponding QoS information and the actual access address of the non-SIP service includes the following steps:

Step A: The IMS queries the subscribed QoS information of the non-SIP service from the HSS.

Step B: whether the QoS required by the non-SIP service exceeds the subscribed QoS of the non-SIP service is judged. If the QoS required by the non-SIP service does not exceed the subscribed QoS, whether the IMS stores the service feature information complying with conditions may be judged according to the AOR in the SIP request and the QoS information required by the non-SIP service. If the IMS stores such service feature information, the actual access address of the non-SIP service and the corresponding QoS information from the service feature information complying with the conditions may be obtained.

Step 106: The service registration center maps the parameters, such as bandwidth, delay, and jitters, which are independent of applications, carried in the obtained QoS information and need to be assured by the network, to standard parameters , and sends a SIP 18X response carrying the corresponding QoS information and the actual access address of the non-SIP service to the application S-CSCF.

Below is an example of the SIP response:

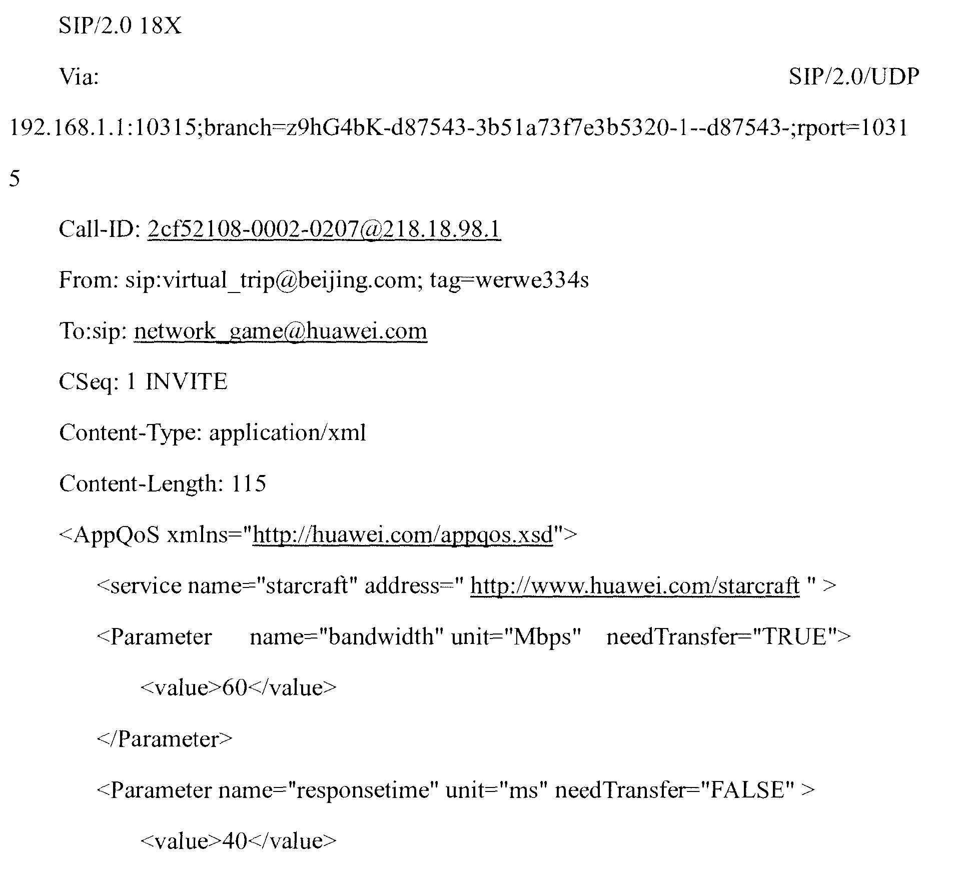

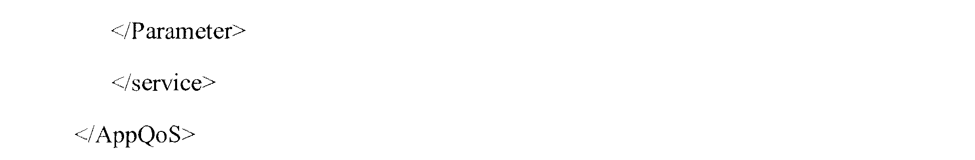

Step 107: The application S-CSCF forwards the SIP 18X response to the home calling S-CSCF.

Step 108: The home calling S-CSCF forwards the SIP 18X response to the P-CSCF.

Step 109: The P-CSCF resolves the standard parameters that are carried in the SIP 18X response and need to be assured by the network into QoS parameters (for example, the bandwidth is 60 Mbps) identifiable to the Policy and Charging Rules Function (PCRF), and sends the QoS parameters to the PCRF.

Step 110: The PCRF sends a resource reservation request to the GGSN according to the received QoS parameters.

Step 111: The GGSN reserves resources for the non-SIP service according to the resource reservation request sent by the PCRF.

Step 112: The GGSN returns a resource reservation success response to the P-CSCF.

Step 113: The P-CSCF sends a SIP X18 response to the service terminal, where the SIP X18 response carries the corresponding QoS information and actual access address of the non-SIP service.

Step 113 and step 109 may be performed at the same time.

Step 114: The service registration center returns a SIP 200 success response to the service terminal, and the service terminal returns a SIP Ack response to the service registration center.

Step 115: The service terminal sends a request for accessing the non-SIP service to the GGSN according to the actual access address of the non-SIP service, and accesses the non-SIP service by using the resources reserved on the GGSN.

It is understandable to those skilled in the art that all or part of the steps of the foregoing embodiments may be implemented by hardware instructed by a program. The program may be stored in a computer-readable storage medium. When being executed, the program performs the steps of the foregoing method embodiments. The storage medium may be any medium capable of storing program codes, for example, a Read-Only Memory (ROM), a Random Access Memory (RAM), a magnetic disk, and a compact disk.

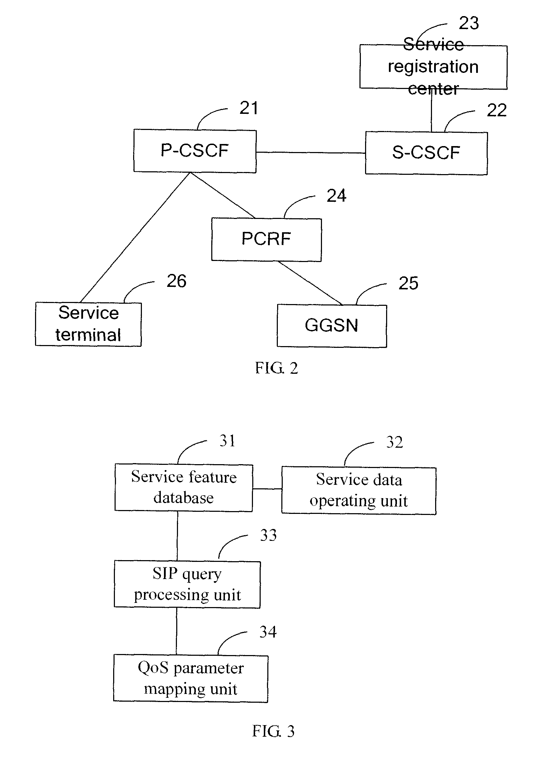

FIG. 2 shows a structure of a system for controlling access to non-SIP services in an embodiment of the present invention. The system includes: a P-CSCF 21, an S-CSCF 22, a service registration center 23, a PCRF 24, and a GGSN 25.

The P-CSCF 21 is adapted to: receive a SIP request that requires the IMS to reserve resources for a non-SIP service, where the SIP request is sent by a service terminal 26 and carries an AOR of the non-SIP service, forward the SIP request to the S-CSCF 22, receive a SIP response, resolve standard parameters that are carried in the SIP response and need to be assured by the network into QoS parameters identifiable to the PCRF 24, and then send the QoS parameters to the PCRF 24.

The S-CSCF 22 is adapted to: receive the SIP request forwarded by the P-CSCF 21, forward the SIP request to the service registration center 23, and receive the SIP response and forward the SIP response to the P-CSCF 21.

The service registration center 23 is adapted to: store the service feature information of various non-SIP services, including AOR, actual access address, and corresponding QoS information, obtain the corresponding QoS information and the actual access address of the non-SIP service according to the AOR in the SIP request, and send the SIP response that carries the corresponding QoS information and the actual access address of the non-SIP service to the S-CSCF.

If the SIP request carries only the AOR of the non-SIP service, the process in which the service registration center 23 obtains the corresponding QoS information and the actual access address of the non-SIP service according to the AOR in the SIP request includes the following steps:

Step A: The service registration center 23 obtains the subscribed QoS information of the non-SIP service from the HSS.

Step B: According to the AOR in the SIP request and the subscribed QoS information of the non-SIP service, whether any service feature information complying with conditions is stored locally may be judged. If any service feature information complying with conditions is stored locally, the corresponding QoS information actual access address of the non-SIP service from the service feature information complying with the conditions may be obtained.

If the SIP request also carries the QoS information required by the non-SIP service, the process in which the service registration center 23 obtains the corresponding QoS information and the actual access address of the non-SIP service according to the AOR in the SIP request includes the following steps:

Step A: The service registration center 23 queries the subscribed QoS information of the non-SIP service from the HSS.

Step B: whether the QoS required by the non-SIP service exceeds the subscribed QoS of the non-SIP service may be judged. If the QoS required by the non-SIP service does not exceed the subscribed QoS, whether any service feature information complying with conditions is stored locally according to the AOR in the SIP request and the QoS information required by the non-SIP service may be judged. If the service registration center stores such service feature information, the corresponding QoS information and actual access address of the non-SIP service from the service feature information complying with the conditions may be obtained.

The PCRF 24 is adapted to forward the SIP response that is sent by the P-CSCF and carries the QoS parameters to the GGSN 25.

The GGSN 25 reserves resources for the non-SIP service according to the QoS parameters carried in the SIP response.

The P-CSCF 21, S-CSCF 22, PCRF 24, and GGSN 25 are function entities in the IMS.

FIG. 3 shows a structure of a service registration center in an embodiment of the present invention. The service registration center includes: a service feature database 31, a service data operating unit 32, a SIP query processing unit 32,and QoS parameter mapping unit 33

The service feature database 31 is adapted to store service feature information of various non-SIP services, including AOR, actual access address, and corresponding QoS information;

The service data operating unit 32, is adapted to update the service feature information of various non-SIP services stored in the service feature database 31;

The SIP query processing unit 32, is adapted to: receive a SIP request, obtain subscribed QoS information of the non-SIP service from the HSS, judge, according to the AOR in the SIP request and the subscribed QoS information of the non-SIP service obtained from the HSS, whether any service feature information complying with conditions exists in the service feature information of various non-SIP services stored in the service feature database 31, and if any service feature information complying with the conditions exists, obtain the corresponding QoS information and actual access address of the non-SIP service in service feature information complying with the conditions, and return a SIP response that carries the corresponding QoS information and actual access address of the non-SIP service; and

QoS parameter mapping unit 33, is adapted to map the QoS parameters that are carried in the QoS information obtained by the SIP query processing unit 32 and need to be assured by the network to standard parameters.

Through the method and system for controlling access to non-SIP services as well as the service registration center provided herein, QoS-assured resources are reserved for non-SIP services through the IMS, and the non-SIP services are accessed through the resources, and thus high QoS assurance is provided for accessing non-SIP services.

Detailed above are a method and system for controlling access to non-SIP services as well as a service registration center. Although the invention has been described through some exemplary embodiments, the invention is not limited to such embodiments. It is apparent that those skilled in the art can make various modifications and variations to the present invention without departing from the spirit and scope of the present invention. The present invention is intended to cover these modifications and variations provided that they fall in the scope of protection defined by the following claims or their equivalents.

## Claims

1. A method for controlling access to non-Session Initiation Protocol (non-SIP) services, comprising:
receiving, by an IP Multimedia Subsystem (IMS), a SIP request sent by a service terminal, wherein the SIP request requires the IMS to reserve resources for a non-SIP service and carries an Address Of Record (AOR) of the non-SIP service;
obtaining, by the IMS according to the AOR of the non-SIP service in the SIP request, corresponding Quality of Service (QoS) information and an actual access address of the non-SIP service from a service registration center;
by the IMS, reserving the resources for the non-SIP service according to the obtained QoS information corresponding to the non-SIP service, and returning the actual access address of the non-SIP service to the service terminal so that the service terminal can access the non-SIP service according to the actual access address of the non SIP service.

2. The method for controlling access to non-SIP services according to claim 1, wherein before the service terminal sends the SIP request to the IMS to request the IMS to reserve the resources for the non-SIP service, the method further comprises:
registering the AOR of the non-SIP service, the actual access address of non SIP service, and the corresponding QoS information with the service registration center; and
binding, by the service registration center, the registered AOR of the non-SIP service, the actual access address of the non SIP service, and the corresponding QoS information.

3. The method for controlling access to non-SIP services according to claim 1, wherein the process of obtaining the corresponding QoS information and the actual access address of the non-SIP service from the service registration center by the IMS according to the AOR of the non-SIP service in the SIP request comprises:
forwarding, by the IMS, the SIP request to the service registration center;
obtaining, by the service registration center, subscribed QoS information of the non-SIP service from a Home Subscriber Server (HSS);
according to the AOR in the SIP request and the subscribed QoS information of the non-SIP service, judging whether the service registration center stores service feature information complying with conditions; if the service registration center stores the service feature information complying with the conditions, obtaining the corresponding QoS information and actual access address of non SIP service from the service feature information complying with the conditions; and
returning the obtained corresponding QoS information and actual access address of non SIP service to the IMS.

4. The method for controlling access to non-SIP services according to claim 3, wherein:
after obtaining the QoS information complying with requirements of the non-SIP service and the actual access address of the non SIP service, the method further comprises: mapping QoS parameters that are carried in the obtained QoS information and need to be assured by a network to standard parameters; and
the process of reserving the resources for the non-SIP service by the IMS according to the obtained QoS information of the non-SIP service is:
reserving the resources for the non-SIP service according to QoS standard parameters that need to be assured by the network.

5. The method for controlling access to non-SIP services according to claim 1, wherein if the SIP request further carries the QoS information required by the non-SIP service, the process of obtaining the corresponding QoS information and the actual access address of the non-SIP service from the service registration center by the IMS according to the AOR of the non-SIP service in the SIP request comprises:
forwarding, by the IMS, the SIP request to the service registration center;
querying, by the service registration center, subscribed QoS information of the non-SIP service from a Home Subscriber Server (HSS);
judging whether the QoS required by the SIP service exceeds the subscribed QoS of the non-SIP service; if the QoS required by the SIP service does not exceed the subscribed QoS of the non-SIP service, judging whether the service registration center stores any service feature information complying with conditions according to the AOR in the SIP request and the QoS information required by the non-SIP service; if the service registration center stores the service feature information complying with the conditions, obtaining the corresponding QoS information and actual access address of the non SIP service from the service feature information complying with the conditions; and
returning the obtained corresponding QoS information and actual access address of the non SIP service to the IMS.

6. A control method for reserving resources for non-Session Initiation Protocol (non-SIP) services, comprising:
receiving a SIP request for reserving resources for a non-SIP service, wherein the SIP request carries an Address Of Record ,AOR, of the non-SIP service;
obtaining QoS information corresponding to the non-SIP service from a service registration center according to the AOR of the non-SIP service in the SIP request; and
reserving the resources for the non-SIP service according to the obtained QoS information corresponding to the non-SIP service.

7. The control method for reserving resources for non-SIP services according to claim 6, wherein before receiving the SIP request for reserving the resources for the non-SIP service, the method further comprises:
registering the AOR of the non-SIP service and the corresponding QoS information with the service registration center; and
binding, by the service registration center, the registered AOR of the non-SIP service and the corresponding QoS information.

8. The control method for reserving resources for non-SIP services according to claim 6, wherein the process of obtaining the QoS information corresponding to the non-SIP service from the service registration center according to the AOR of the non-SIP service in the SIP request comprises:
forwarding the SIP request to the service registration center;
obtaining, by the service registration center, subscribed QoS information of the non-SIP service from a Home Subscriber Server ,HSS,;
judging whether the service registration center stores service feature information complying with conditions according to the AOR in the SIP request and the subscribed QoS information of the non-SIP service; if the service registration center stores the service feature information complying with the conditions, obtaining the corresponding QoS information from the service feature information complying with the conditions; and
returning the obtained QoS information.

9. The control method for reserving resources for non-SIP services according to claim 8, wherein after obtaining the QoS information complying with requirements of the non-SIP service, the method further comprises:
mapping QoS parameters that are carried in the obtained QoS information and need to be assured by a network to standard parameters.

10. A method for providing Quality of Service ,QoS, information corresponding to non-Session Initiation Protocol,non-SIP, services, comprising:
receiving a SIP request for reserving resources for a non-SIP service, wherein the SIP request carries an Address Of Record ,AOR, of the non-SIP service;
obtaining QoS information corresponding to the non-SIP service according to the AOR of the non-SIP service; and
returning the obtained QoS information corresponding to the non-SIP service.

11. The method for providing QoS information corresponding to non-SIP services according to claim 10, wherein before receiving the SIP request for reserving the resources for the non-SIP service, the method further comprises:
registering the AOR of the non-SIP service and the corresponding QoS information; and
binding the registered AOR of the non-SIP service and the corresponding QoS information.

12. The method for providing QoS information corresponding to non-SIP services according to claim 10, wherein the process of obtaining the QoS information corresponding to the non-SIP service according to the AOR of the non-SIP service comprises:
obtaining subscribed QoS information of the non-SIP service from a Home Subscriber Server ,HSS,; and
according to the AOR in the SIP request and the subscribed QoS information of the non-SIP service, judging whether any service feature information complying with conditions exists; if any service feature information complying with the conditions exists, obtaining the QoS information from the service feature information complying with the conditions.

13. A system for controlling access to non-Session Initiation Protocol (non-SIP) services, comprising:
a Proxy-Call Session Control Function ,P-CSCF, adapted to: receive and forward a SIP request for reserving resources for a non-SIP service, wherein the SIP request carries an Address Of Record ,AOR, of the non-SIP service, receive a SIP response, resolve standard parameters that are carried in the SIP response and need to be assured by a network into QoS parameters, and then send the QoS parameters;
a service registration center, adapted to: obtain corresponding QoS information and an actual access address of the non-SIP service according to the AOR in the SIP request forwarded by the P-CSCF, and send the SIP response that carries the corresponding QoS information and the actual access address of the non-SIP service to the P-CSCF; and
a Gateway GPRS Support Node ,GGSN" adapted to reserve the resources for the non-SIP service according to the QoS parameters carried in the SIP response sent by the P-CSCF.

14. The system for controlling access to non-SIP services according to claim 13, further comprising:
a Policy and Charging Rules Function ,PCRF, adapted to forward the SIP response that is sent by the P-CSCF and carries the QoS parameters to the GGSN.

15. The system for controlling access to non-SIP services according to claim 13, further comprising:
a Serving-Call Session Control Function ,S-CSCF, adapted to: forward the SIP request sent by the P-CSCF to the service registration center, and forward the SIP response sent by the service registration center to the P-CSCF.

16. The system for controlling access to non-SIP services according to claim 13, wherein the service registration center comprises:
a SIP query processing unit, adapted to: receive the SIP request forwarded by the P-CSCF, obtain subscribed QoS information of the non-SIP service, and judge whether any service feature information complying with conditions exists according to the AOR in the SIP request and the obtained subscribed QoS information of the non-SIP service; if any service feature information complying with the conditions exists, obtain the corresponding QoS information and actual access address of non-SIP service in the service feature information, and return the SIP response that carries the corresponding QoS information and the actual access address of the non-SIP service to the P-CSCF; and
a QoS parameter mapping unit, adapted to map the QoS parameters to the standard parameters, wherein the QoS parameters are carried in the QoS information obtained by the SIP query processing unit and need to be assured by the network.

17. The system for controlling access to non-SIP services according to claim 16, wherein the service registration center further comprises:
a service feature database, adapted to store the service feature information of various non-SIP services wherein the service feature information comprises the AOR, the actual access address, and the corresponding QoS information, wherein the SIP query processing unit may query whether any service feature information complying with the conditions exists.

18. The system for controlling access to non-SIP services according to claim 17, wherein the service registration center further comprises:
a service data operating unit, adapted to update the service feature information of various non-SIP services stored in the service feature database;

19. A service registration center, comprising:
a Session Initiation Protocol, SIP, query processing unit, adapted to: receive a SIP request, obtain subscribed Quality of Service, QoS, information of a non-SIP service, judge whether any service feature information complying with conditions exists in service feature information of various non-SIP services stored in a service feature database according to an Address Of Record ,AOR, in the SIP request and the obtained subscribed QoS information of the non-SIP service, and if any service feature information complying with the conditions exists, obtain the corresponding QoS information and actual access address of the non-SIP service in service feature information complying with the condition, and return a SIP response that carries the corresponding QoS information and actual access address of the non-SIP service; and
a QoS parameter mapping unit, adapted to map QoS parameters to the standard parameters, wherein the QoS parameters are carried in the QoS information obtained by the SIP query processing unit and need to be assured by a network to standard parameters.

20. The service registration center of claim 19, further comprising:
a service feature database, adapted to: store the service feature information of various non-SIP services, wherein the service feature information comprises the AOR, the actual access address, and the corresponding QoS information.

21. The service registration center of claim 20, further comprising:
a service data operating unit, adapted to update the service feature information of various non-SIP services stored in the service feature database.
